(19) Europäisches Patentamt
European Patent Office
Office européen des brevets

(11) **EP 3 428 707 B1**

(12) **EUROPEAN PATENT SPECIFICATION**

(45) Date of publication and mention
of the grant of the patent:
**19.01.2022 Bulletin 2022/03**

(51) International Patent Classification (IPC):
***G02B 19/00*** (2006.01)    ***G02B 6/26*** (2006.01)
***F21V 7/08*** (2006.01)    ***G02B 27/10*** (2006.01)

(21) Application number: **17382453.3**

(22) Date of filing: **11.07.2017**

(52) Cooperative Patent Classification (CPC):
**G02B 19/0066; G02B 19/0023; G02B 27/106**

(54) **MODULAR OPTICAL SYSTEM**

MODULARES OPTISCHES SYSTEM

SYSTÈME OPTIQUE MODULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.01.2019 Bulletin 2019/03**

(73) Proprietor: **Viola Terès, Josep Ramón
43850 Tarragona (ES)**

(72) Inventor: **Viola Terès, Josep Ramón
43850 Tarragona (ES)**

(74) Representative: **Balder IP Law, S.L.
Paseo de la Castellana 93
5ª planta
28046 Madrid (ES)**

(56) References cited:
**FR-A1- 3 009 065      US-A1- 2004 062 045
US-A1- 2005 243 570      US-A1- 2014 268 732**

## Description

The invention herein relates to a modular optical system to sum light intensities from an arbitrary number of sources and able to deliver the combined light with the desired geometrical characteristics at the exit. When acting in reverse, the system divides light from one input to several output ports.

## Background to the invention

The study of non-linear optical phenomena with point or broad-beam, with coherent or incoherent light, as for example, Second Harmonic Generation or Sum Frequency Generation requires high intensities, precise directionality and low geometrical divergence for the incoming light beam. In addition, it is advantageous to couple high intensities of light into an optical guide and used elsewhere. This is desirable, for example, in hazardous environments or to simplify maintenance. The geometric condition for coupling is that light must travel mainly in the axial direction of the guide to couple and the angle of the input beam has to be lower or equal to the acceptance angle of the guide defined by its Numerical Aperture (NA).

Systems for guiding light emitted from a light source to an exit point are known from FR3009065 A1, US2004062045 A1, US2005243570 A1, US2014268732 A1.

## Description of the Invention

From the above described, it is an objective of the invention herein to provide a modular optical system to sum light intensities from an arbitrary number of sources and able to deliver the combined light with the desired geometrical characteristics at the exit and, when acting in reverse, the system divides light from one input to several output ports.

In a first aspect of the invention, it is proposed a modular optical system according to claim 1.

According to another aspect of the invention, said each sequential pair of forward-reflecting curved surfaces (4,16) and backward-reflecting curved surfaces (9,17) are generated by two 3D ellipsoid forms (14, 15) wherein each consecutive pair of ellipsoids (14, 15) have a common focus, F2 (11).

According to another aspect of the invention, the light from each light source (25) travels through a unique volume interval defined by a first angle (6) and a second angle (7) until said common exit point (8) wherein the each of these angles is lower or equal to the maximum angle allowed for all out coming light source (25).

According to another aspect of the invention, the angle, $\varphi$ (13), of the axis of the long axis of the ellipsoid (14) closest to the light source (25) is chosen such as match geometrical constrains.

According to another aspect of the invention, in each pair of consecutive ellipsoid (14, 15), the second focus, F2 (11) of the first ellipsoid (14) is the first focus F2 (11) of the second ellipsoid (15).

According to another aspect of the invention, each ellipsoid (14) has a limited surface on which rays can be reflected (16).

According to another aspect of the invention said backwards-reflecting curved surface (9) is generated with same method that the forwards-reflecting curved (4) and wherein the computations are made from taking as reference an extra virtual light source (19) symmetric respect to the real surface (5) to light source (2).

According to another aspect of the invention, said light from each source pass through a coupling 3D curved surface (24) wherein said 3D curved surface (24) is arranged so that the rays from the light source (25) strike at zero degrees respect to the local normal to the curve surface's tangent.

According to another aspect of the invention, both reflecting curved surfaces share a common curved edge (23) at the top and are joined at the bottom by a 3D curved surface (24).

According to another aspect of the invention, the light in said common exit point (8) exits through a decoupling 3D curved surface (26) wherein said 3D curved surface (26) is arranged so that the rays strike at zero degrees respect to the local normal to the curve surface's tangent.

In a further embodiment of the invention, modules can be defined as the minimum functional units being manufactured from suitable optical materials or combination thereof. The combination of at least the coupling and reflecting surfaces for one source, any section to act as optical guide and the decoupling surface defines a module. Modules may also be surrounded by cladding materials and/or reflective coatings.

According to another aspect of the invention, the light sources are grouped to match the coupling surfaces of the modules.

According to another aspect of the invention, one or several sequential light sources with its associated reflecting surfaces are arranged in a group.

According to another aspect of the invention, beams from a group of sequentially light sources are combined (25).

According to another aspect of the invention, beams from at least two groups with identical or dissimilar number of sequentially light sources are combined (25).

According to another aspect of the invention, said modular optical system adds light intensities from at least two plane-symmetric groups of light sources (25).

According to another aspect of the invention, said modular optical system adds light intensities from at least two rotational-symmetry groups of light sources (25).

According to another aspect of the invention, the modular optical system adds light intensities from any even or odd number of rotational-symmetry groups of light sources

According to another aspect of the invention, said modular optical system adds light intensities from at least three non-rotational-symmetry groups of light sources (25).

According to another aspect of the invention, said modular optical system adds light intensities from at least one group of light sources whose output light at the common exit point is input light source into another module.

According to another aspect of the invention, the combination of modules forms a ring-like topology.

According to another aspect of the invention, optical elements are placed between modules.

According to another aspect of the invention, the combination of modules forms a 3D matrix-like topology.

**Brief description of the drawings**

For a better understanding of what has been disclosed, drawings are attached in which, schematically and solely by way of non-limiting example, some practical embodiments are represented.

In the drawings:

Fig.1 is a schematic representation of a point light source reflected on a curved surface.

Fig.2 is a schematic representation of a broad light source reflected on a curved surface wherein the source has a collimating optics.

Fig.3 is a schematic representation of a light source with both a forward-reflecting and a backwards-reflecting surface wherein the rays reflected in the backwards-reflecting surface are reflected on a flat surface.

Fig. 4 is a schematic 2D representation of a 3D ellipsoid used as forward-reflecting surfaces.

Fig. 5 is a schematic representation of two consecutives ellipsoids with common focus F2 used to generate the two reflecting surface for the forward-emitted light.

Fig. 6 is a schematic representation of two consecutives ellipsoids used to define two reflecting surfaces for the forward-emitted light and two other consecutives ellipsoids used to define two reflecting surfaces for the backward-emitted light.

Fig. 7 is a schematic representation of a light source with a specific emission angle $\alpha$, and with forward-reflecting and a backward-reflecting surface.

Fig. 8 is a schematic representation of N light sources with a common exit point and the angles allowed for every source.

Fig. 9 is a schematic representation of an embodiment of the system from the x-y plane viewpoint.

Fig. 10 is a schematic representation of location of the centres of two consecutives ellipsoids.

Fig. 11 is an axial representation of simplified process to obtain the ellipsoids.

Fig. 12 is a schematic representation of how forward-emitted light emanating from F1 of a first ellipsoid pass through focus F2 of this first ellipsoid but this focus F2 is also the first focus of the second ellipsoid after another reflection light and then it will be directed towards the Focus F3, the exit point.

Fig. 13 is an extended schematic representation of previous figure 12.

Fig. 14 is a schematic representation of how the ellipsoids for a broad source, the two extreme light rays limit the extension of the needed reflection surfaces.

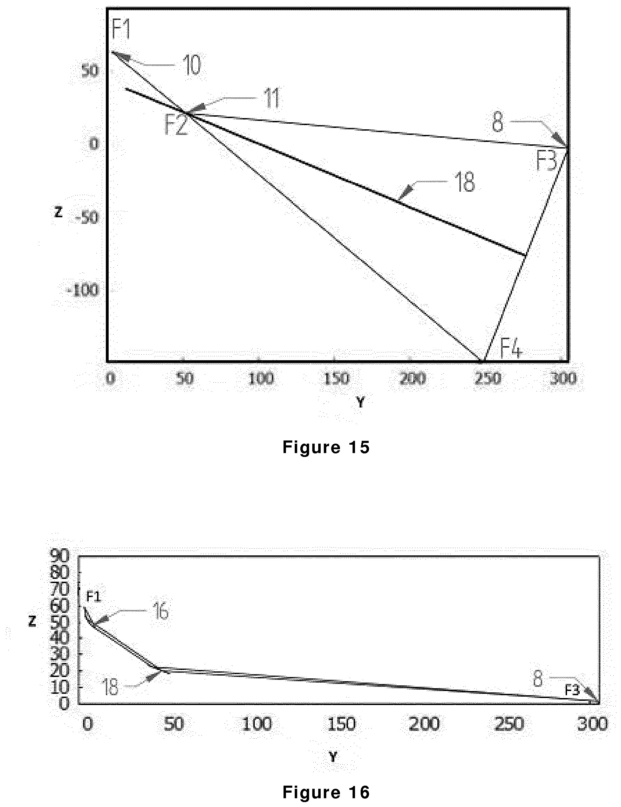

Fig. 15 is a schematic representation of how the second ellipsoid of a light source can be substituted by a flat surface.

Fig. 16 is a schematic representation of how, in an embodiment of the system, only it is needed the regions defined by the extreme rays.

Fig. 17 is a schematic representation of how the backwards-reflecting surfaces for broad sources can be generate with the introduction of an extra virtual source and virtual surface.

Fig. 18 is a schematic representation of the effect of the flat surface on the ellipsoids for the backward emitted light where this light, is redirected to the front and towards common exit point F3.

Fig. 19 is a schematic representation of a coupling 3D curved surface in the light source.

Fig. 20 is a schematic representation of one the preferred embodiment of the system.

Fig. 21 is a schematic representation of internal physical implementation of the previous preferred embodiment of the system.

Fig. 22 is a schematic representation, for a module with one group of one source, of the external physical implementation of the common curved edge (23) at the top of reflecting surfaces (4, 9) being joined at the bottom by the 3D curved surface (24).

Fig. 23 is a schematic representation of an embodiment of the system not falling under the scope of the invention, with some plane reflection surfaces.

Fig. 24 is a schematic representation of another internal physical implementation of the previous embodiment of the system, with some plane reflection surfaces.

Fig. 25 is a schematic representation of a group of light sources each with two ellipsoids for the forward-emitted light and two ellipsoids and flat surface for the backwards-emitted light.

Fig. 26 is a schematic representation of a physical implementation of the system with one group with three sources.

Fig. 27 is a schematic representation of a physical implementation of the system with plane-symmetric groups of sources.

Fig. 28 is a rear view schematic representation of a physical implementation of the system with rotational-symmetry modules of four groups of light sources.

Fig. 29 is a schematic representation of a physical implementation of the system with rotational-symmetry groups of sources.

Fig. 30 is a rear view schematic representation of a physical implementation of the system with rotational-symmetry modules of six groups of light sources.

Fig. 31 is a schematic representation of a physical implementation of the system with a 3D curved decoupling surface at the forward end of the light guide section of the module.

Fig. 32 is a schematic representation of a physical implementation of the system with three different positions of the 3D curved decoupling surface at the forward end of the light guide section of the module.

Fig. 33 is a schematic representation of a physical implementation of the system with several modules coupled to other modules.

Fig. 34 is a schematic representation of a loop of ellipsoids or ellipsoid-planes to circulate and accumulate light.

Fig. 35 is a schematic representation of a physical implementation of the system with light output from several modules coupled to other modules and thus the light circulates and accumulates in the system with optical elements embedded.

Fig. 36 is a schematic representation of a physical implementation of the system with a cubic geometry of modules.

Fig. 37 is a schematic representation of a physical implementation of the system showing an example of the housings for the modules.

Fig. 38, 39 y 40 are schematics representation of a physical implementation of the system according to previous figure 36, but with external cooling for the modules.

**Description of preferred embodiments of the invention**

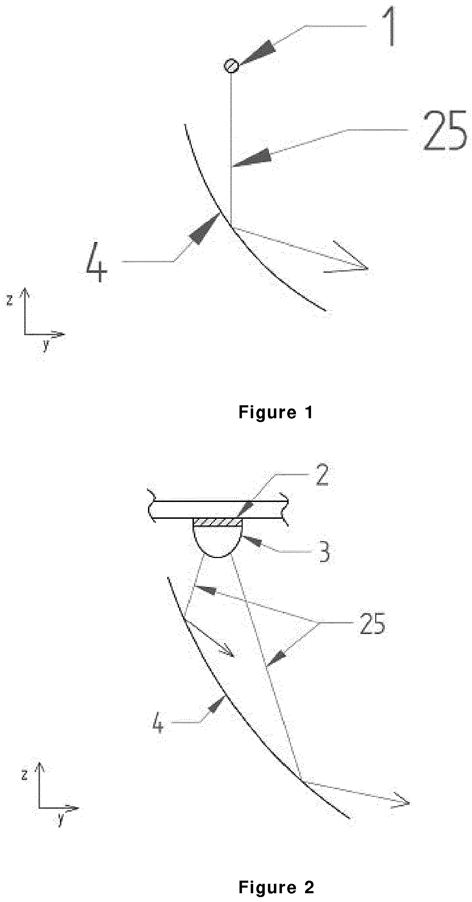

This invention relates to a modular optical system to deliver, in one direction and with the desired Numerical Aperture (NA) at the exit, the combined light from an arbitrary number of point sources such as lasers (1), Fig. 1, or small broad sources such as LEDs (2), Fig 2, with or without associated collimating optics (3). Each source has its unique set of surfaces, each of them, with variable curvature in the 3D space (4) that re-directs the emitted light (5) via internal reflection towards a common exit point (8). Sources can be arranged sequentially in a group and several groups of sources can be arranged all of them with the common exit point (8) for the emitted light. The same system working in the reverse direction can be used to divide light from one input to several output ports.

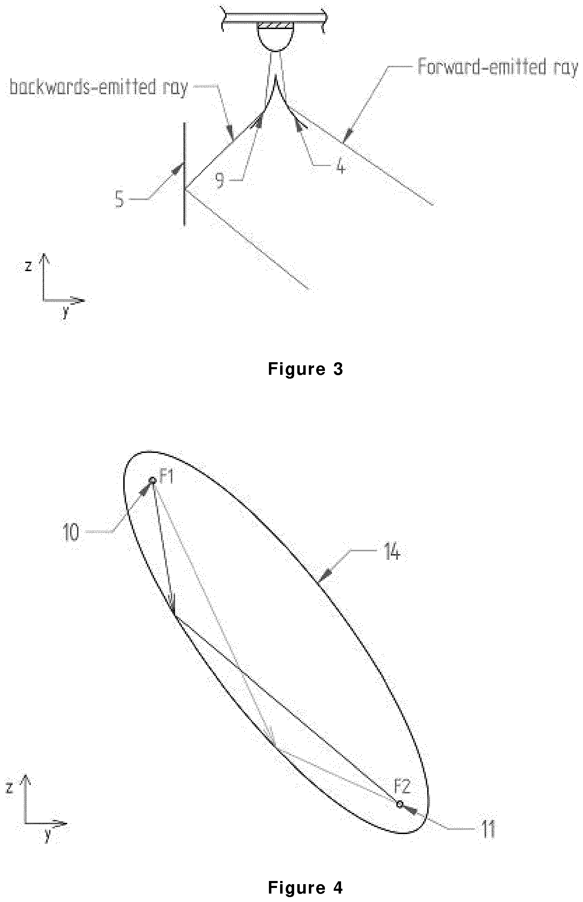

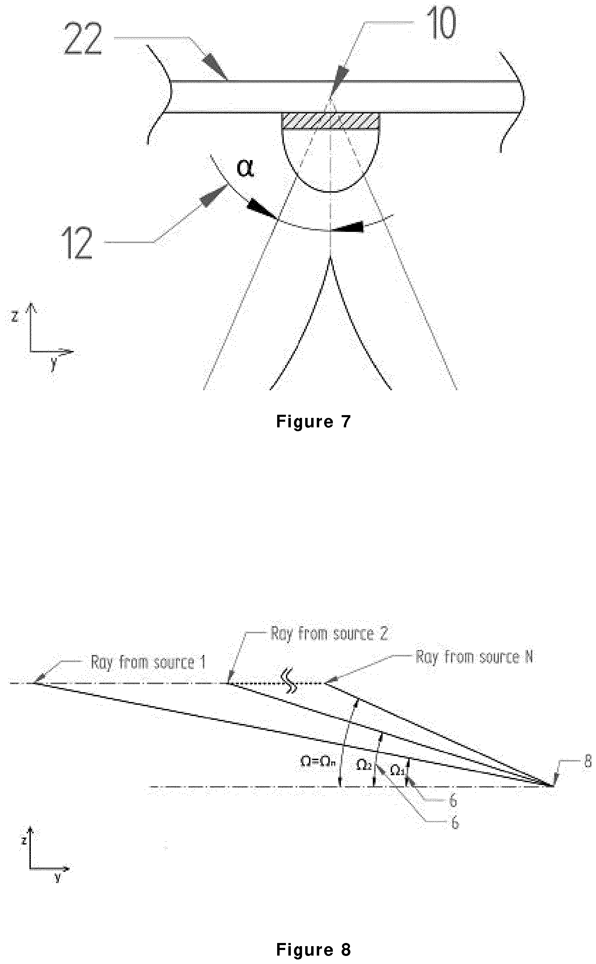

Thus, the objective of the present innovation is an optical system constructed from one or several elongated modules able to add light intensities from a number of sources. For each source, the module has longitudinal and transversal cuts that create at least one surface (4) with its own variable curvature in the 3D space and, for the broad source, one mainly vertical flat surface (5). Curved surfaces concentrate and direct the emitted light in the axial (elongated) direction whereas the flat surface switches backwards-emitted light towards the forward direction, Fig. 3. Light from each source travels within their own angular region (6) (7) defined by the number of emitters and the desired geometric characteristics for the output beam, Figs. 7 and 8. Light from all emitters will converge at a common exit point (8) with the desired geometrical quality for the output beam.

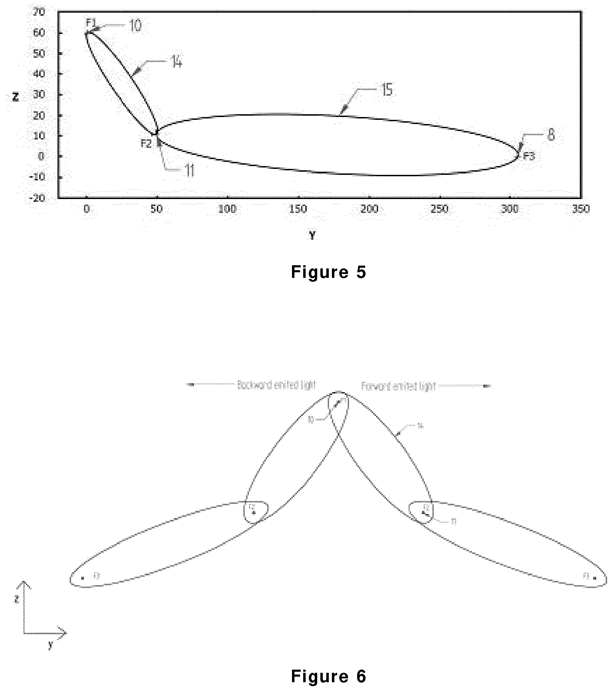

For point sources, only forward-reflecting surfaces (4) are required. However, for broad sources it is advantageous to use both a forward and a backwards-reflecting (9) surfaces as light can then be delivered with the lowest possible NA at the exit, Fig 3. Forward reflecting surfaces (3) can be generated from 3D quadratic forms, in particular ellipsoids. Ellipsoids have the property that any ray emanating from one of its focus F1, Fig. 4 and 5 (10) will pass through the other focus F2, Fig. 4 and 5 (11) after one reflection. In order to conduct and concentrate light in the forward direction, from the source F1 to the final point, the reflecting surfaces can be constructed from a minimum of one, Fig. 4, two, Fig. 5, or several ellipsoids with a common focus for each consecutive pair of ellipsoids, F2(11).

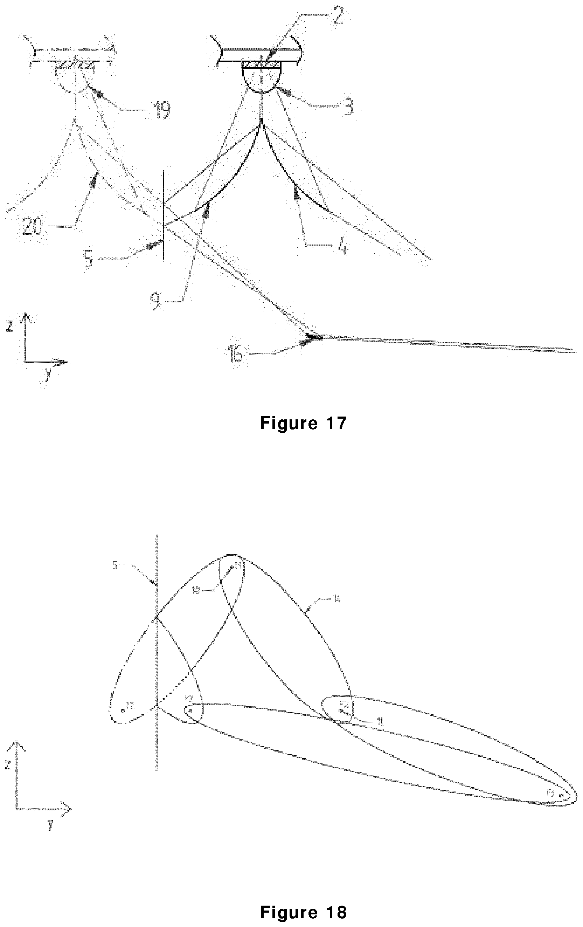

In a further embodiment of the invention, in order to keep the system compact, to accommodate as many sources as possible and to obtain low divergence for the beam at the exit, it is advantageous to use, for each source, reflecting surfaces from a minimum of two ellipsoids, Fig. 5, for the point sources or four plus a vertical flat surface for broad sources, Fig. 6., Fig.18

In a further embodiment of the invention, the position of the real broad source does not need to coincide with the position of the focus F1 (10) of the first ellipsoid but rather, it is the converging point of the projection in the opposite direction of the extreme emission rays (25) that defines the focus F1 (10), and the emission angle $\alpha$ (12), Fig. 7.

In a further embodiment of the invention, light from each source travels through a unique volume interval defined by angles (6) and (7) until the exit (8).

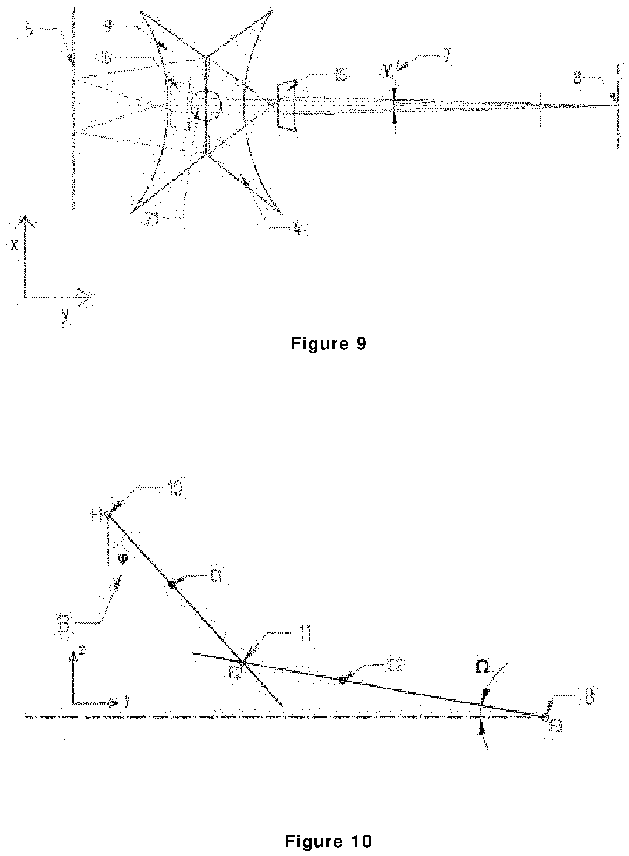

In the *y-z* plane, given N sources and being $\Omega$ de maximum angle allowed for all out coming light, Fig. 8, a fraction $\Omega N = \Omega/N$ is assigned to each source. For the *k-th* source $(k \leq N)$, its light rays would travel inside the angle range, $\Delta\Omega_K = \Omega_k - \Omega_{k-1}$, Fig 9.

The angle $\Omega = \Omega_N$ defines the upper limit of the allowed region.

In the x-y plane the angle available to each broad source, $Y_i$ (7), is defined by the system thickness in the *x-direction, w* and the distance in the *y-direction* to the exit point *F3* (8), Figs 9 and 10.

In a further embodiment of the invention, the angle $\varphi$, (13) of the axis of the long axis of the Ellipsoid 1, Fig. 5, is chosen to as to match geometrical constrains.

In a further embodiment of the invention, the common Focus *F2* for each pair of ellipsoids, is the intersection point of the line defined by the angle $\varphi$ and passing through *F1* with the line from F3 and angle $\Omega$, Fig. 10. From these points the centre of each ellipsoid, $C_i=(C_{ix},C_{iy},C_{iz})$,with$(i=1,2)$, can be calculated as the equidistant point between the respective foci.

In a further embodiment of the invention, a simplified process to compute major and minor axis of the Ellipsoids can be deduced for the two ellipsoids.

For Ellipsoid 1 (14), *F2* and the *C1* are rotated around the perpendicular *x-axis* with *F1* as the centre of rotation and projected onto the vertical *z-axis.* The process is repeated for Ellipsoid 2 (15), with F3 as the rotation centre and projecting *F2* and *C2* onto the horizontal *y-axis.* Now, the equation of each Ellipsoid (8) (9) has no cross members *(yz, xy, xz terms),* Fig. 10.

Taking into account the desired geometrical dimensions, the ellipsoid *semi-axis, a, b* and c can be calculated. Further simplification can be achieved for the particular case a = c, that is, cross sections of the ellipsoid are circles along the long radius.

For the first Ellipsoid:

$$\frac{x^2}{a^2} + \frac{y^2}{a^2} + \frac{(z - z_0)^2}{b^2} = 1$$

This is the formula of an ellipsoid with centre coordinates $(0, 0, z_0)$. Being *a, b* the short and the long *semi-axis* respectively. Equivalently, for the second ellipsoid:

$$\frac{x^2}{a^2} + \frac{(y - y_0)^2}{b^2} + \frac{z^2}{a^2} = 1$$

Finally, the ellipsoids are rotated back to the desired position, Fig. 5, so they share again the focus F2. Now the formula for the ellipsoids is more complex containing cross members *(yz, xy, xz terms).*

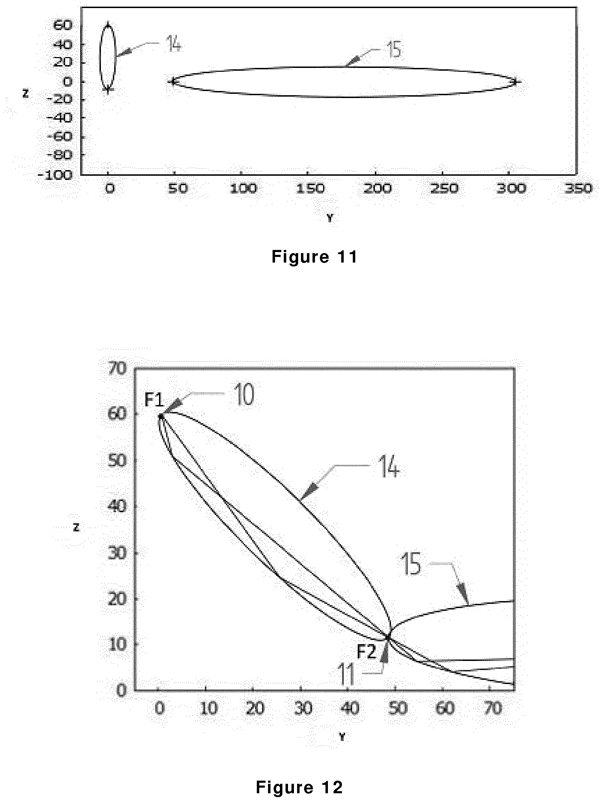

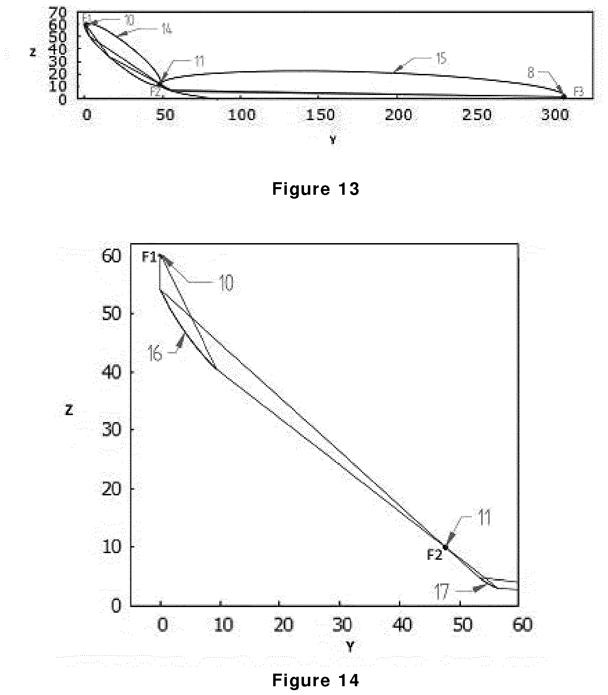

In a further embodiment of the invention, for the calculated surfaces of the ellipsoids, light emanating from focus F1 will after one reflection pass through focus F2 (11) of the first Ellipsoid. However, being F2 also a focus of the second Ellipsoid after another reflection light is directed towards the Focus F3, the exit point (8). Figs. 12 and 13

In a further embodiment of the invention, at each ellipsoid (14), (15), and for a broad source, the two extreme light rays limit the extension of the needed reflection surfaces (16) and (17), Fig. 14.

In a further embodiment of the invention, surfaces from Ellipsoid 2 can be substituted by a flat surface S (18). Flat surfaces are generated from the condition that light travels the same optical path length as for the case of surfaces from ellipsoids. Starting from the intersection of the axis with the same associated angles, we define as before, F1, *F2* and *F3.* However, now *F2* is one point on the plane *S* (18) to be calculated.

From *F1, F2* and *F3* we can define *F4* as a point on the line defined by the angle $\varphi$, passing through *F1* and F2 at a distance $\Delta(F1,F4)$ from *F1* that equals to, Fig. 14:

$$\Delta(F1, F4) = \Delta(F1, F2) + \Delta(F2, F3)$$

It calculates the new ellipsoid (14), with Foci *F1* (11) and *F4* (12), using the same approach as in the previous section, Foci and Centre are projected to the vertical axis, the Ellipsoid semi-axis defined and finally rotated back to position. Without the surface *S* (18), any light ray emanating from *F1* after one reflection on the surface of the ellipsoid would pass through the Focus *F4* with an optical path of length $\delta = \Delta(F1,F4)$. However, with *S* (18), any light ray from *F1* (10) will reflect at *S* and converge at *F3* (15) after travelling the same optical length $\delta$.

In a further embodiment of the invention, reflecting surfaces for the backwards-emitted light of broad sources can be generated with the introduction of an extra virtual source (19) symmetric to surface (5), and to source (2), respectively. With these this virtual source, the same two-ellipsoid approach can be used as for the forward case to compute the virtual forward surface (20) and the real surface (16), Fig. 17. From virtual surface (20), by symmetry, real backwards-reflecting surface (9) can be computed.

In a further embodiment of the invention and for *N* real broad sources, *2N* sources and *4N* surfaces needs to be computed.

In a further embodiment of the invention, because sources are at different locations and use different angular regions, each one has its exclusive set of reflecting surfaces and every surface with different variable curvature in the 3D space.

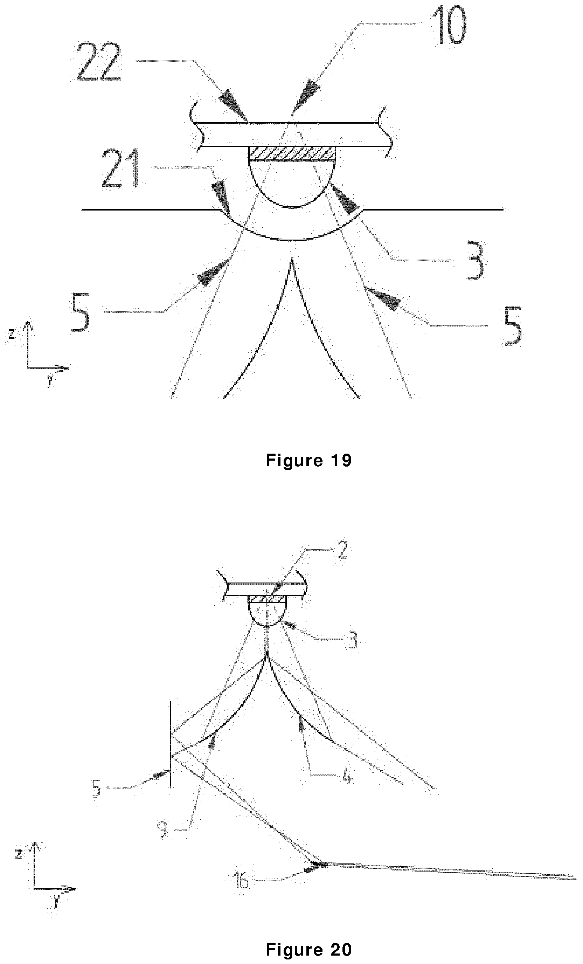

In a further embodiment of the invention, light from the source enters into the module through a coupling surface (21), Fig. 19. This is a variable 3D curved surface ensuring that rays from the source strike the module at zero degrees respect to the local normal to the surface's tangent, thus minimizing the amount of reflected light and avoiding refractions at entry. Sources will be anchored to or supported by a proper mechanism (22).

In a further embodiment of the invention, modules can be defined as the minimum functional units being manufactured from suitable optical materials or combination thereof. Modules may also be surrounded by cladding materials and/or reflective coatings. Physically, the combination of at least one source, its coupling, reflecting and decoupling surfaces and any section to act as optical guide defines a module.

In a further embodiment of the invention, from the above mathematical framework a physical module with one source and surfaces from two ellipsoids can be designed. For example, we select the following geometric dimensions (distances in mm):

$$F1 = (0,0,60), \qquad F3 = (0,305,0), \qquad \alpha = 30^o, \qquad \varphi = 45^o \ and \ \Omega = 2.5^o$$

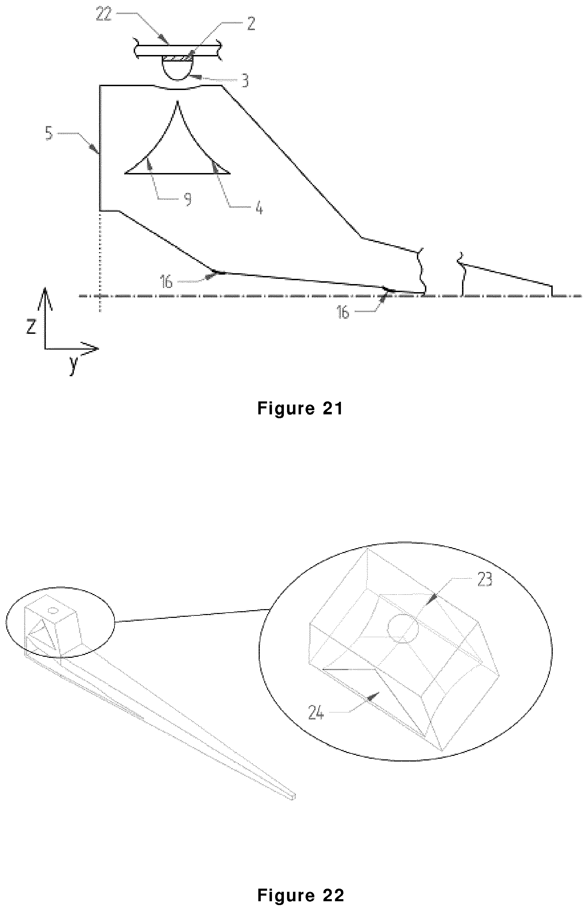

The two extreme light rays define the needed part of the surfaces. The reflection surfaces, Fig. 20, and the physical implementation can be seen in Figs. 21 and 22 respectively.

In a further embodiment of the invention, forward and backward surfaces share a common curved edge (23) at the top and are joined at the bottom by a 3D curved surface (24). Edge curvature at the top ensured that most light emitted towards the transverse direction can be captured and reflected. Curvature for the lower surface ensues that transversal cuts can be manufactured by standard manufacturing processes as it can be seen in Fig. 22.

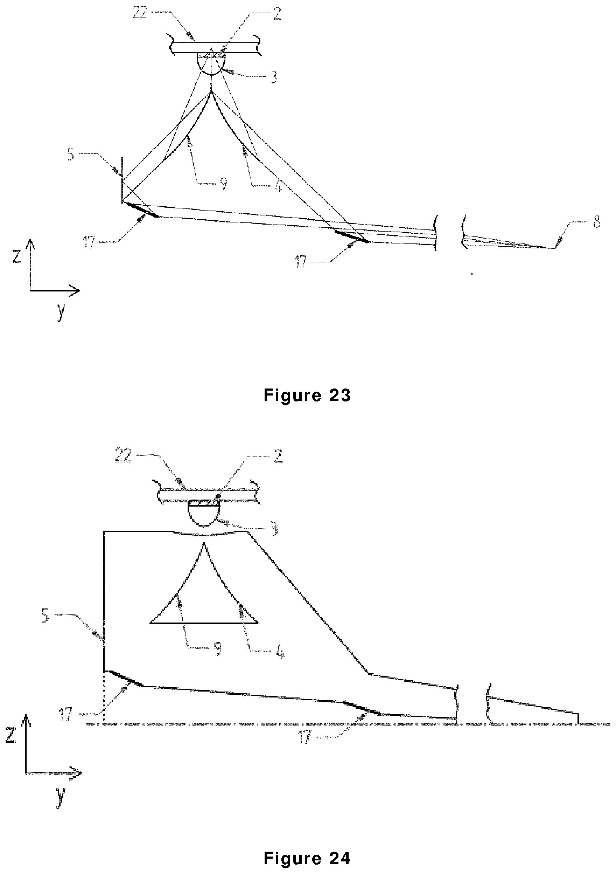

In a further embodiment not falling under the scope of the invention, from the above mathematical framework a physical module with one source and surfaces from an ellipsoid and a plane, for each initial direction of light, can be designed. With the same values as embodiment of the previous paragraph, the reflection surfaces and the physical implementation can be seen in Figs. 23 and 24 respectively.

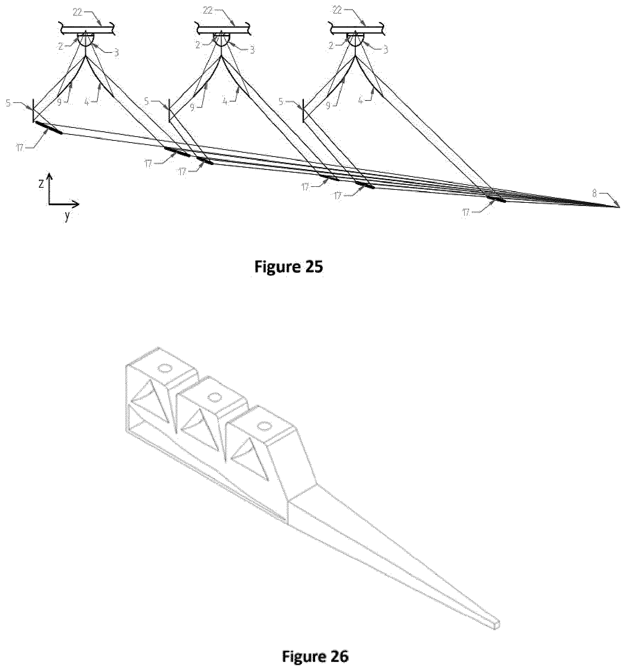

In a further embodiment of the invention, a group of an arbitrary number of at least two ellipsoids or ellipsoids-flat surfaces per source and per direction of the emitted light, with common exit point F3 can be defined, Fig. 25.

In a further embodiment of the invention, physical implementation of embodiment, for example, one group with 3 sources, Fig. 26

In a further embodiment of the invention, the number of sources in each group is only limited by the desired dimensions of the system.

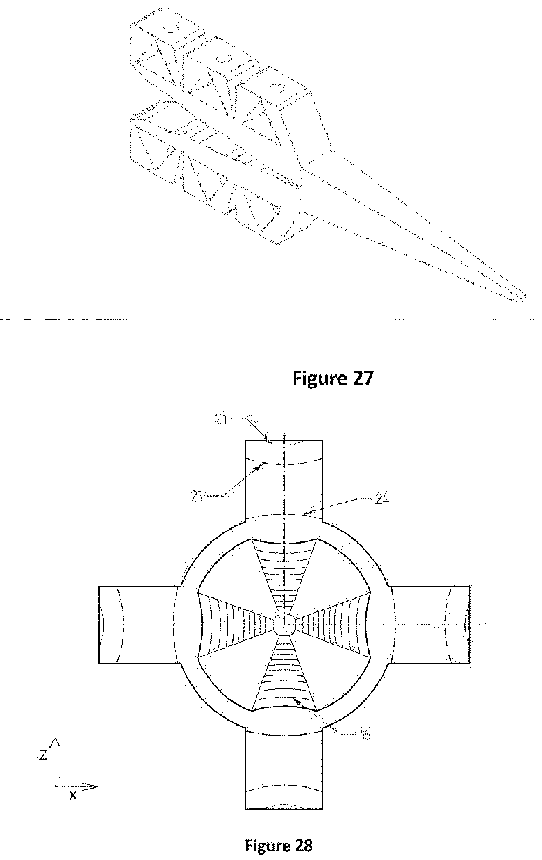

In a further embodiment of the invention, modules with a plane-symmetric groups of sources, Fig. 27.

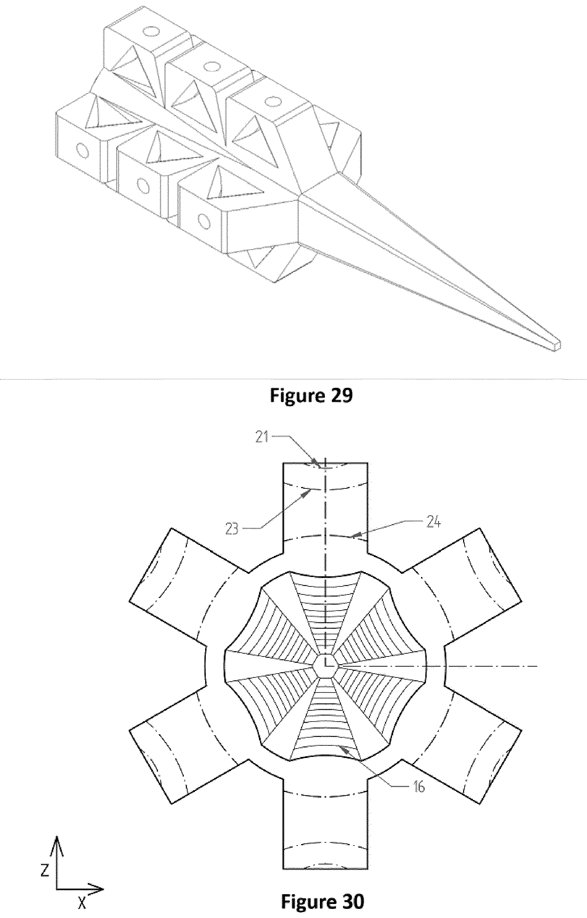

In a further embodiment of the invention, modules with rotational-symmetry, four groups of sources can be constructed, rear view Fig. 28, longitudinal view Fig. 29.

In a further embodiment of the invention, a module with six groups of sources with rotational symmetry can be constructed, rear view, Fig. 30.

In a further embodiment of the invention, in general, a module with N groups of sources with rotational symmetry can be constructed, being the number of groups of sources and the number of sources per group only limited by imposed geometry constrains.

In a further embodiment of the invention, in general, a module with *N* groups of sources without rotational symmetry can be constructed, being the number of groups of sources and the number of sources per group only limited by imposed geometry constrains.

In a further embodiment of the invention, in general, a module with groups of sources with rotational symmetry and groups of sources without rotational symmetry can be constructed, being the number of groups of sources and the number of sources per group only limited by imposed geometry constrains.

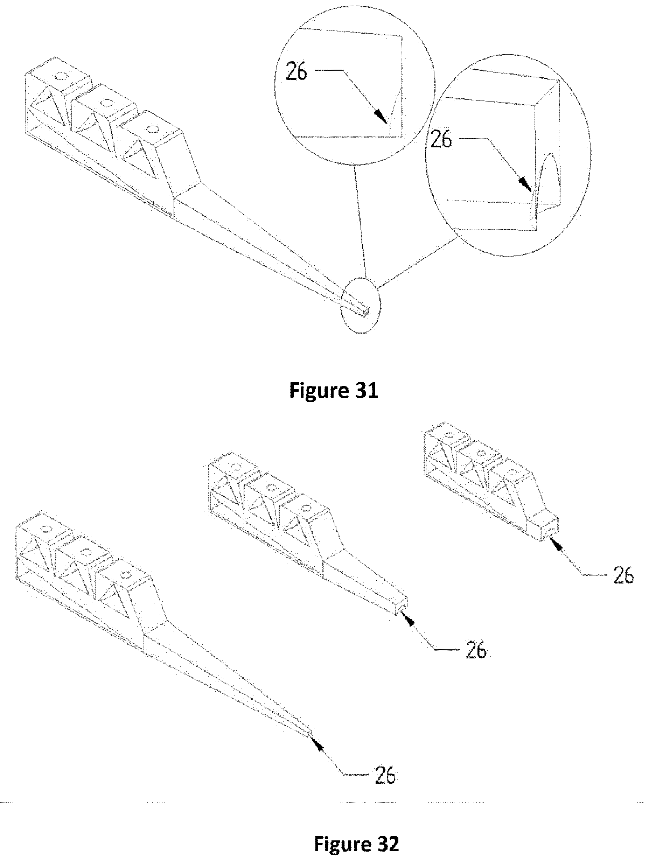

In a further embodiment of the invention, light in the guide exits through a decoupling surface (26), Fig. 31 This is a variable 3D curved surface ensuring that rays strike the exit surface at zero degrees respect to the local normal to the surface's tangent, thus minimizing the amount of reflected light and avoiding refractions at exit. This exit surface at the forward end of the light guide, can be placed anywhere between the closest reflection surface to the exit point (8) and the exit point itself, Fig. 32.

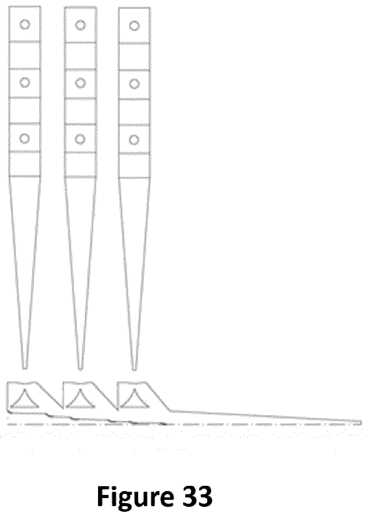

In a further embodiment of the invention, light output from several modules can be coupled to other modules and so on, with the combined power delivered through a single output. This coupling can be direct, Fig. 33, or through a light guide like optical fibres. The concept can be scaled up to any desired dimension, being only limited by imposed geometry constrains.

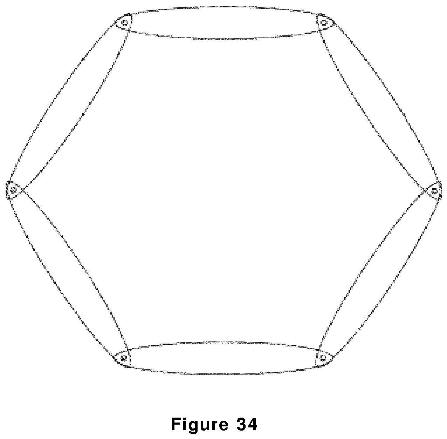

In a further embodiment of the invention, a loop of ellipsoids or ellipsoid-planes can be combined to form a closed, ring-like topology, Fig 34.

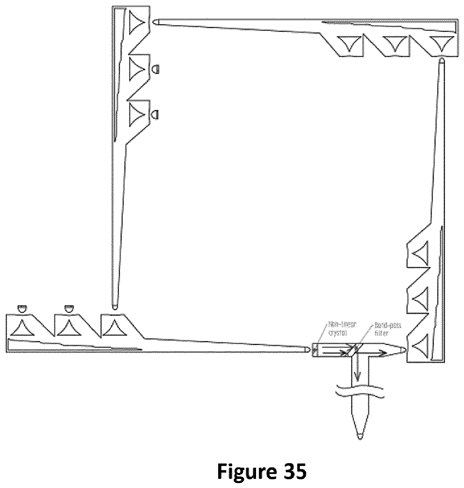

In a further embodiment of the invention, light output from several modules can be coupled to other modules. The power from the original sources and can thus circulate and accumulate in the system. Circulating light can selectively be decoupled from the system though one or several embedded optical elements, Fig. 35.

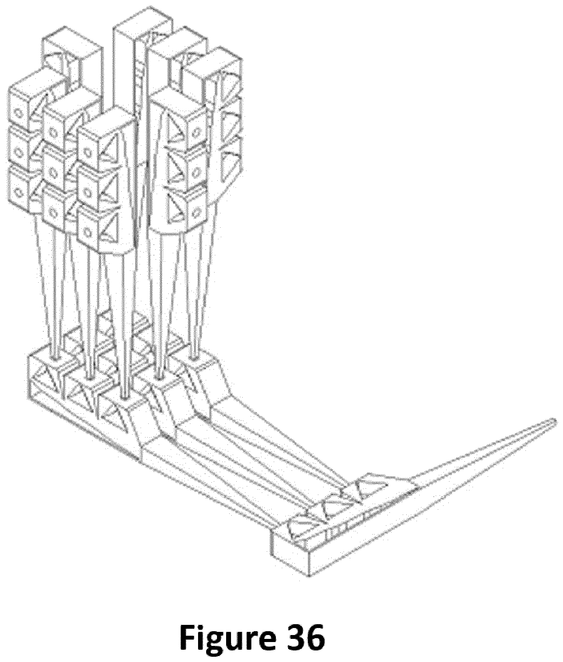

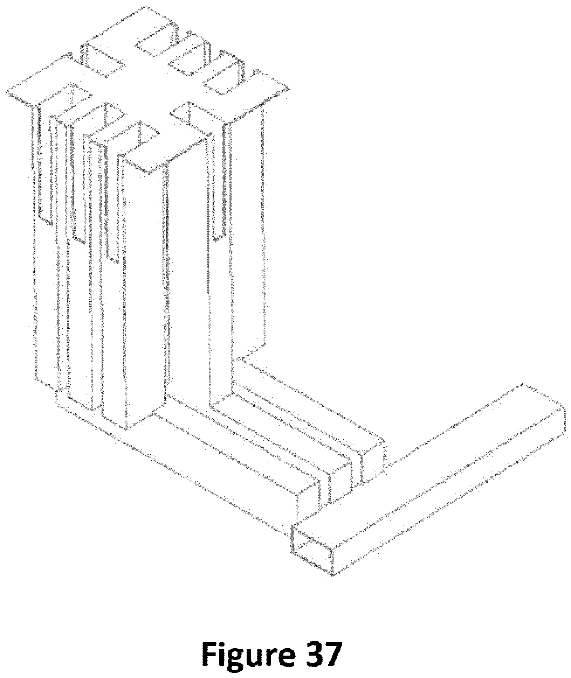

In a further embodiment of the invention, modules can be combined, Fig. 36, arranging them in a 3D matrix of rails, Fig. 37. Rails contain all support for sources as well as all ancillary support for the electrical part.

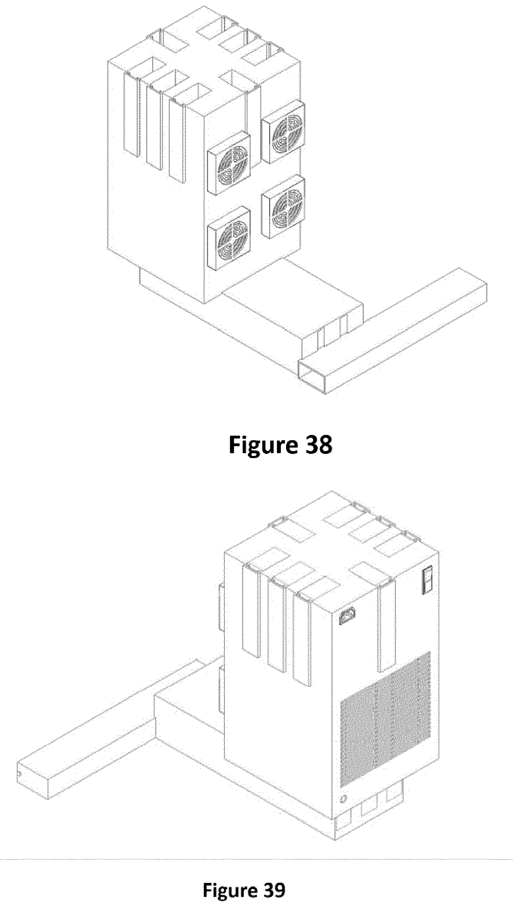

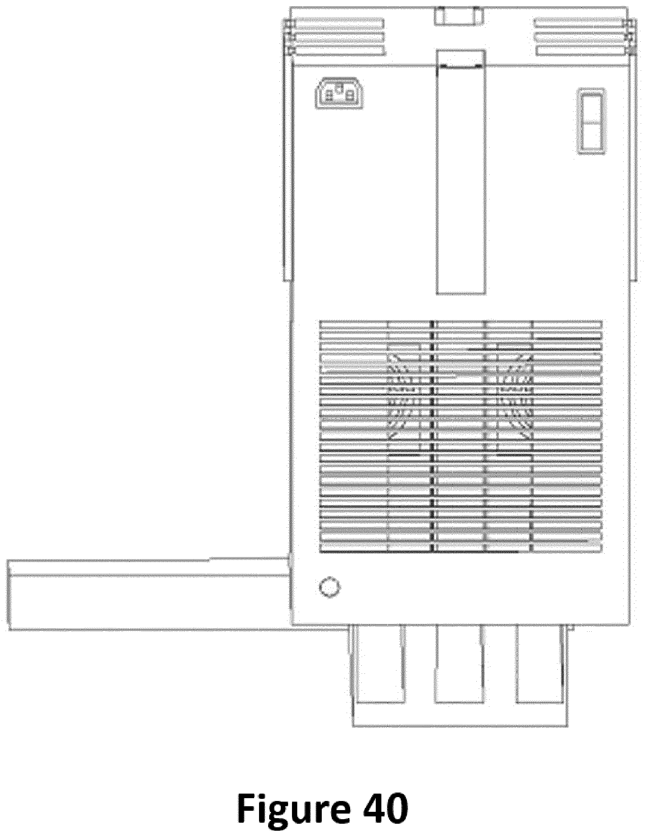

In a further embodiment of the invention, embodiment can be enclosed by a cube Figs. 38, 39 and 40 or other suitable geometry. Internal faces of the enclosed box can be black painted, covered or coated by a light absorbing material to help reduce astray light. Rails, the box itself and any ancillary geometric features like fins and openings for the cooling media can help to conduct and dissipate the generated heat. Heat removal can be forced or passive depending on requirements. Because coupling -to-coupling modules does not need to touch each other and are guided and supported by rails, maintenance is greatly improved. The faulty module can be simply pulled out from the box and replaced.

In a further embodiment of the invention, light output from several boxes can be coupled to a module or to another box and so on, with the final combined power delivered through a single output. The concept can be scaled up to any desired dimension, being only limited by imposed geometry constrains.

## Claims

1. A modular optical system arranged to sum light intensities from at least two light sources emitting light in the vertical direction and deliver the combined light at a common exit point, c forward direction being defined which is a direction towards the common exit point, a backward direction being defined which is the reverse direction with respect to the forward direction, **characterized in that** for each light source (2) are provided in the system at least four curved surfaces (4,9,16,17) each of them with its own variable 3D curvature, where the first and the second of said curved surfaces (4,16) are forward-reflecting surfaces each arranged to redirect a part of the emitted light (25) towards the common exit point (8), the third one of said curved surfaces is a backwards-reflecting surface (9) arranged to re-direct in the backward direction a part of the emitted light (25) to an additional vertical flat surface (5) of the system which re-directs this light via internal reflection towards the forth curved surface (17) which re-directs this light via internal reflection towards said common exit point (8), where in at least the first curved surface redirect the light via internal reflection towards said common exit point wherein said light beam in the said common exit point (8) has geometrical constrains such that it has angles (6, 7) lower or equal to the angle defined as the specified Numerical Aperture (NA) at the exit.

2. A modular optical system arranged to sum light intensities from at least two light sources and deliver the combined light at a common exit point according claim 1 **characterized in that** said each first and second curved surfaces (4,16) and the third and forth curved surfaces (9,17) are generated from two 3D ellipsoid forms (14, 15) wherein each consecutive pair of ellipsoids (14, 15) have a common focus, F2 (11) wherein the second focus, F2 (11) of the first ellipsoid (14) is the first focus F2 (11) of the second ellipsoid (15).

3. A modular optical system arranged to sum light intensities from at least two light sources and deliver the combined light at a common exit point according claim 2 **characterized in that** the light from each light source (2) travels through a unique volume interval defined from the difference between two consecutive first angle (6) and a second angle (7) until said common exit point (8) wherein the maximum of each of these angles is the maximum angle allowed for all out coming light of the light source (2).

4. A modular optical system arranged to sum light intensities from at least two light sources and deliver the combined light at a common exit point according claim 2 **characterized in that** the angle (13) between the axis of the long axis of the ellipsoid (14) closest to the light source (2) and a direction perpendicular to the vertically emitted light are chosen such as match geometrical constrains.

5. A modular optical system arranged to sum light intensities from at least two light sources and deliver the combined light at a common exit point according claim 2 **characterized in that** each ellipsoid (14) has a limited surface on which rays can be reflected (16).

6. A modular optical system arranged to sum light intensities from at least two light sources and deliver the combined light at a common exit point according claim 1 **characterized in that** said backwards-reflecting third curved surface (9) and fourth surface (16) are generated with same method that the forwards-reflecting first curved surface (4) and wherein the computations are made from taking as reference an extra virtual light source (19) symmetric to the real surface (5) and to light source (2).

7. A modular optical system arranged to sum light intensities from at least two light sources and deliver the combined light at a common exit point according to claim 1 **characterized in that** said each light source pass through a coupling 3D curved surface (24) (21, 24) wherein said 3D curved surface (21, 24) is arranged so that the rays from the light source (2) strike at zero degrees respect to the local normal to the curve surface's tangent.

8. A modular optical system arranged to sum light intensities from at least two light sources and deliver the combined light at a common exit point according to claim 7 **characterized in that** the first curved surface (4) and the third curved surface (9) share a common curved edge (23) at the top and are joined at the bottom by a 3D curved surface (21, 24)

9. A modular optical system arranged to sum light intensities from at least two light sources and deliver the combined light at a common exit point according claim 1 **characterized in that** the light in said common exit point (8) exits through a decoupling 3D curved surface (26) wherein said 3D curved surface (26) is arranged so that the rays strike at zero degrees respect to the local normal to the curve surface's tangent.

10. A modular optical system arranged to sum light intensities from at least two light sources and deliver the combined light at a common exit point according to claim 1 **characterized in that** light sources are arranged sequentially in at least one group.

11. A modular optical system arranged to sum light intensities from at least two light sources and deliver the combined light at a common exit point according to claim 11 **characterized in that** light from at least one group of light sources are combined.

12. A modular optical system arranged to sum light intensities from at least two light sources and deliver the combined light at a common exit point according to claim 11 **characterized in that** said modular optical system has at least one group of light sources whose output light at the common exit point is input light source into another module.

13. A modular optical system arranged to sum light intensities from at least two light sources and deliver the combined light at a common exit point according to claim 12 **characterized in that** the combination of modules forms a ring-like topology.

14. A modular optical system arranged to sum light intensities from at least two light sources and deliver the combined light at a common exit point according to claim 12 **characterized in that** the combination of modules forms a 3D matrix-like topology.


**Patentansprüche**

1. Modulares optisches System, das angeordnet ist, um Lichtintensitäten von mindestens zwei Lichtquellen, die Licht in der vertikalen Richtung emittieren, zu summieren und das kombinierte Licht an einem gemeinsamen Austrittspunkt abzugeben, wobei eine Vorwärtsrichtung definiert ist, die eine Richtung hin zu dem gemeinsamen Austrittspunkt ist, wobei eine Rückwärtsrichtung definiert ist, die die umgekehrte Richtung in Bezug auf die Vorwärtsrichtung ist, **dadurch gekennzeichnet, dass** für jede Lichtquelle (2) in dem System mindestens vier gekrümmte Flächen (4, 9, 16, 17) bereitgestellt sind, von denen jede ihre eigene variable 3D-Krümmung aufweist, wobei die erste und zweite der gekrümmten Flächen (4, 16) vorwärtsreflektierende Flächen sind, die jeweils angeordnet sind, um einen Teil des emittierten Lichts (25) in Richtung des gemeinsamen Austrittspunkts (8) umzulenken, die dritte der gekrümmten Flächen eine rückwärtsreflektierende Fläche (9) ist, die angeordnet ist, um einen Teil des emittierten Lichts (25) in der Rückwärtsrichtung zu einer zusätzlichen vertikalen flachen Fläche (5) des Systems umzulenken, die dieses Licht mittels Innenreflexion in Richtung der vierten gekrümmten Fläche (17) umlenkt, die dieses Licht mittels Innenreflexion in Richtung des gemeinsamen Austrittspunkts (8) umlenkt, wobei zumindest die erste gekrümmte Fläche das Licht mittels Innenreflexion in Richtung des gemeinsamen Austrittspunkts umlenkt, wobei der Lichtstrahl in dem gemeinsamen Austrittspunkt (8) geometrische Einschränkungen aufweist, sodass er Winkel (6, 7) aufweist, die kleiner oder gleich dem Winkel sind, der als die spezifische numerische Apertur (NA) an dem Austritt definiert ist.

2. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 1, **dadurch gekennzeichnet, dass** jede erste und zweite gekrümmte Fläche (4, 16) und die dritte und vierte gekrümmte Fläche (9, 17) aus zwei 3D-Ellipsoidformen (14, 15) erzeugt werden, wobei jedes aufeinanderfolgende Paar von Ellipsoiden (14, 15) einen gemeinsamen Brennpunkt, F2 (11), aufweist, wobei der zweite Brennpunkt, F2 (11), des ersten Ellipsoids (14) der erste Brennpunkt, F2 (11), des zweiten Ellipsoids (15) ist.

3. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 2, **dadurch gekennzeichnet, dass** das Licht von jeder Lichtquelle (2) durch ein einziges Volumenintervall verläuft, das durch die Differenz zwischen zwei aufeinanderfolgenden, erster Winkel (6) und ein zweiter Winkel (7), bis zu dem gemeinsamen Austrittspunkt (8) definiert ist, wobei das Maximum jedes dieser Winkel der maximale Winkel ist, der für das gesamte ausgehende Licht der Lichtquelle (2) zulässig ist.

4. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 2, **dadurch gekennzeichnet, dass** der Winkel φ (13) zwischen der Achse der langen Achse des Ellipsoids (14) am nächsten zur Lichtquelle (2) und einer Richtung senkrecht zu dem vertikal emittierten Licht so gewählt ist, dass er geometrischen Einschränkungen entspricht.

5. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 2, **dadurch gekennzeichnet, dass** jedes Ellipsoid (14) eine begrenzte Fläche aufweist, auf der Strahlen reflektiert werden können (16).

6. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 1, **dadurch gekennzeichnet, dass** die rückwärtsreflektierende dritte gekrümmte Fläche (9) und die vierte Fläche (16) mit dem gleichen Verfahren wie die vorwärtsreflektierende erste gekrümmte Fläche (4) erzeugt werden und wobei die Berechnungen vorgenommen werden, indem eine zusätzliche virtuelle Lichtquelle (19), die symmetrisch zu der realen Fläche (5) und zu der Lichtquelle (2) ist, als Referenz herangezogen wird.

7. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 1, **dadurch gekennzeichnet, dass** jede Lichtquelle durch eine koppelnde gekrümmte 3D-Fläche (24) (21, 24) verläuft, wobei die gekrümmte 3D-Fläche (21, 24) so angeordnet ist, dass die Strahlen von der Lichtquelle (2) bei null Grad in Bezug auf die lokale Normale zu der Tangente der gekrümmten Fläche auftreffen.

8. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 7, **dadurch gekennzeichnet, dass** die erste gekrümmte Fläche (4) und die dritte gekrümmte Fläche (9) eine gemeinsame gekrümmte Kante (23) an der Oberseite teilen und an der Unterseite durch eine gekrümmte 3D-Fläche (21, 24) verbunden sind.

9. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 1, **dadurch gekennzeichnet, dass** das Licht in dem gemeinsamen Austrittspunkt (8) durch eine entkoppelnde gekrümmte 3D-Fläche (26) austritt, wobei die gekrümmte 3D-Fläche (26) so angeordnet ist, dass die Strahlen bei null Grad in Bezug auf die lokale Normale zu der Tangente der gekrümmten Fläche auftreffen.

10. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 1, **dadurch gekennzeichnet, dass** Lichtquellen aufeinanderfolgend in mindestens einer Gruppe angeordnet sind.

11. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 11, **dadurch gekennzeichnet, dass** Licht von mindestens einer Gruppe von Lichtquellen kombiniert wird.

12. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 11, **dadurch gekennzeichnet, dass** das modulare optische System mindestens eine Gruppe von Lichtquellen aufweist, deren Ausgangslicht an dem gemeinsamen Austrittspunkt eine Eingangslichtquelle in ein anderes Modul ist.

13. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 12, **dadurch gekennzeichnet, dass** die Kombination der Module eine ringartige Topologie bildet.

14. Modulares optisches System, das angeordnet ist, um Lichtintensitäten von mindestens zwei Lichtquellen zu summieren und das kombinierte Licht an einem gemeinsamen Austrittspunkt abzugeben, nach Anspruch 12, **dadurch gekennzeichnet, dass** die Kombination der Module eine 3D-matrixartige Topologie bildet.

**Revendications**

1. Système optique modulaire agencé pour additionner des intensités lumineuses provenant d'au moins deux sources lumineuses émettant de la lumière dans la direction verticale et distribuer la lumière combinée au niveau d'un point de sortie commun, une direction avant étant définie qui est une direction vers le point de sortie commun, une direction arrière étant définie qui est la direction inverse par rapport à la direction avant, **caractérisé en ce que** pour chaque source lumineuse (2), au moins quatre surfaces (4, 9, 16, 17) incurvées sont prévues dans le système, chacune d'entre elles ayant sa propre courbure 3D variable, où la première et la deuxième desdites surfaces (4, 16) incurvées sont des surfaces réfléchissant vers l'avant, chacune étant agencée pour rediriger une partie de la lumière émise (25) vers le point de sortie commun (8), la troisième desdites surfaces incurvées est une surface (9) réfléchissant vers l'arrière agencée pour rediriger dans la direction arrière une partie de la lumière émise (25) vers une surface (5) plate verticale additionnelle du système qui redirige cette lumière par réflexion interne vers la quatrième surface (17) incurvée qui redirige cette lumière par réflexion interne vers ledit point de sortie commun (8), dans lequel au moins la première surface incurvée redirige la lumière par réflexion interne vers ledit point de sortie commun, dans lequel ledit faisceau lumineux dans ledit point de sortie commun (8) a des contraintes géométriques **en ce qu'**il a des angles (6, 7) inférieurs ou égaux à l'angle défini comme l'ouverture numérique (NA) spécifiée au niveau de la sortie.

2. Système optique modulaire agencé pour additionner des intensités lumineuses provenant d'au moins deux sources lumineuses et distribuer la lumière combinée au niveau d'un point de sortie commun selon la revendication 1, **caractérisé en ce que** chacune desdites première et deuxième surfaces (4, 16) incurvées et les troisième et quatrième surfaces (9, 17) incurvées sont générées à partir de deux formes d'ellipsoïdes (14, 15) 3D, dans lequel chaque paire consécutive d'ellipsoïdes (14, 15) a un foyer F2 (11) commun, dans lequel le deuxième foyer F2 (11) du premier ellipsoïde (14) est le premier foyer F2 (11) du deuxième ellipsoïde (15).

3. Système optique modulaire agencé pour additionner des intensités lumineuses provenant d'au moins deux sources lumineuses et distribuer la lumière combinée au niveau d'un point de sortie commun selon la revendication 2, **caractérisé en ce que** la lumière provenant de chaque source lumineuse (2) se déplace à travers un intervalle de volume unique défini à partir de la différence entre deux premiers angles consécutifs (6) et un deuxième angle (7) jusqu'audit point de sortie commun (8) dans lequel le maximum de chacun de ces angles est l'angle maximum autorisé pour toute la lumière sortante de la source lumineuse (2).

4. Système optique modulaire agencé pour additionner des intensités lumineuses provenant d'au moins deux sources lumineuses et distribuer la lumière combinée au niveau d'un point de sortie commun selon la revendication 2, **caractérisé en ce que** l'angle $\varphi$ (13) entre l'axe du grand axe de l'ellipsoïde (14) le plus proche de la source lumineuse (2) et une direction perpendiculaire à la lumière émise verticalement sont choisis de manière à s'adapter à des contraintes géométriques.

5. Système optique modulaire agencé pour additionner des intensités lumineuses provenant d'au moins deux sources lumineuses et distribuer la lumière combinée au niveau d'un point de sortie commun selon la revendication 2, **caractérisé en ce que** chaque ellipsoïde (14) a une surface limitée sur laquelle des rayons peuvent être réfléchis (16).

6. Système optique modulaire agencé pour additionner des intensités lumineuses provenant d'au moins deux sources lumineuses et distribuer la lumière combinée au niveau d'un point de sortie commun selon la revendication 1, **caractérisé en ce que** lesdites troisième surface (9) et quatrième surface (16) incurvées réfléchissant vers l'arrière sont générées avec la même méthode que la première surface (4) incurvée réfléchissant vers l'avant, et dans lequel les calculs sont effectués en prenant comme référence une source lumineuse (19) virtuelle supplémentaire symétrique à la surface (5) réelle et à la source lumineuse (2).

7. Système optique modulaire agencé pour additionner des intensités lumineuses provenant d'au moins deux sources lumineuses et distribuer la lumière combinée au niveau d'un point de sortie commun selon la revendication 1, **caractérisé en ce que** chacune desdites sources lumineuses passe à travers une surface incurvée 3D (21, 24) de couplage, dans lequel ladite surface incurvée 3D (21, 24) est agencée de sorte que les rayons provenant de la source lumineuse (2) frappent à zéro degré par rapport à la normale locale la tangente de la surface incurvée.

8. Système optique modulaire agencé pour additionner des intensités lumineuses provenant d'au moins deux sources lumineuses et distribuer la lumière combinée au niveau d'un point de sortie commun selon la revendication 7, **caractérisé en ce que** la première surface incurvée (4) et la troisième surface incurvée (9) partagent un bord incurvé (23) commun en haut et sont reliées en bas par une surface incurvée 3D (21, 24).

9. Système optique modulaire agencé pour additionner des intensités lumineuses provenant d'au moins deux sources lumineuses et distribuer la lumière combinée au niveau d'un point de sortie commun selon la revendication 1, **caractérisé en ce que** la lumière dans ledit point de sortie commun (8) sort à travers une surface incurvée 3D (26) de découplage dans lequel ladite surface incurvée 3D (26) est agencée de sorte que les rayons frappent à zéro degré par rapport à la normale locale la tangente de la surface incurvée.

10. Système optique modulaire agencé pour additionner des intensités lumineuses provenant d'au moins deux sources lumineuses et distribuer la lumière combinée au niveau d'un point de sortie commun selon la revendication 1, **caractérisé en ce que** les sources lumineuses sont agencées séquentiellement dans au moins un groupe.

11. Système optique modulaire agencé pour additionner des intensités lumineuses provenant d'au moins deux sources lumineuses et distribuer la lumière combinée au niveau d'un point de sortie commun selon la revendication 11, **caractérisé en ce que** les lumières provenant d'au moins un groupe de sources lumineuses sont combinées.

12. Système optique modulaire agencé pour additionner des intensités lumineuses provenant d'au moins deux sources lumineuses et distribuer la lumière combinée au niveau d'un point de sortie commun selon la revendication 11, **caractérisé en ce que** ledit système optique modulaire a au moins un groupe de sources lumineuses dont la lumière de sortie au niveau du point de sortie commun est une source lumineuse d'entrée dans un autre module.

13. Système optique modulaire agencé pour additionner des intensités lumineuses provenant d'au moins deux sources lumineuses et distribuer la lumière combinée au niveau d'un point de sortie commun selon la revendication 12, **caractérisé en ce que** la combinaison de modules forme une topologie de type anneau.

14. Système optique modulaire agencé pour additionner des intensités lumineuses provenant d'au moins deux sources lumineuses et distribuer la lumière combinée au niveau d'un point de sortie commun selon la revendication 12, **caractérisé en ce que** la combinaison de modules forme une topologie de type matrice 3D.

**Figure 1**

**Figure 2**

**Figure 3**

**Figure 4**

**Figure 5**

**Figure 6**

**Figure 7**

**Figure 8**

**Figure 9**

**Figure 10**

EP 3 428 707 B1

Figure 11

Figure 12

18

**Figure 13**

**Figure 14**

**Figure 15**

**Figure 16**

**Figure 17**

**Figure 18**

**Figure 19**

**Figure 20**

**Figure 21**

**Figure 22**

Figure 23

Figure 24

**Figure 25**

**Figure 26**

**Figure 27**

**Figure 28**

**Figure 29**

**Figure 30**

**Figure 31**

**Figure 32**

Figure 33

**Figure 34**

Non-linear
crystal

Band-pass
filter

Figure 35

Figure 36

Figure 37

**Figure 38**

**Figure 39**

**Figure 40**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3009065 A1
- US 2004062045 A1
- US 2005243570 A1
- US 2014268732 A1